# EUROPEAN PATENT SPECIFICATION

(11) **EP 2 238 788 B1**
(45) Date of publication and mention of the grant of the patent: **28.09.2011**
(21) Application number: 09706125.3
(22) Date of filing: 13.01.2009
(51) Int. Cl.: H04W 36/30

(54) **Change of HSDPA serving cell**
Wechsel einer HSPDA versorgenden Zelle
Changement de cellule de desserte HSDPA

(30) Priority: 31.01.2008 US 25079; 18.12.2008 US 337849
(43) Date of publication of application: 13.10.2010
(73) Proprietor: Telefonaktiebolaget LM Ericsson (publ), 164 83 Stockholm (SE)
(72) Inventor: WAGER, Stefan, FI-02360 Espoo (FI); HU, Rong, Chaoyang District Beijing 100016 (CN); BERGMAN, Johan, SE-11227 Stockholm (SE); GERSTENBERGER, Dirk, SE-113 56 Stockholm (SE)
(74) Representative: Kühn, Friedrich Heinrich
(86) International application number: PCT/SE2009/050016
(87) International publication number: WO 2009/096877

(56) References cited:
- WO-A-2006/134480
- "Universal Mobile Telecommunications System (UMTS); High Speed Downlink Packet Access (HSDPA); Overall description; Stage 2 (3GPP TS 25.308 version 7.5.0 Release 7); ETSI TS 125 308" ETSI STANDARDS, LIS, SOPHIA ANTIPOLIS CEDEX, FRANCE, vol. 3-R2, no. V7.5.0, 1 January 2008 (2008-01-01), XP014040630 ISSN: 0000-0001
- QUALCOMM: "Work Item Description: HS-PDSCH Serving Cell Change Enhancements" 3GPP, RP-071044, [Online] 27 November 2007 (2007-11-27), XP002524569 Cancun, Mexico Retrieved from the Internet: URL:http://ftp.3gpp.org/tsg_ran/TSG_RAN/TS GR_38/Docs/> [retrieved on 2009-04-20]
- ERICSSON: "HS-PDSCH Serving Cell Change Enhancements" 3GPP DRAFT; R1-080911, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG1_RL1\TSGR1_52\Docs, no. Sorrento, Italy; 20080211, 5 February 2008 (2008-02-05), XP050109385

## Description

### TECHNICAL FIELD

Embodiments described herein relate generally to communication systems, and, more particularly, to a high-speed serving cell change in a telecommunication system.

### BACKGROUND

A high-speed downlink shared channel (HS-DSCH) is a channel used in the high-speed downlink packet access (HSDPA) universal mobile telecommunications system (UMTS) (UMTS) that sends packets on a downlink to user equipment. The HS-DSCH does not use soft handover (e.g., where the user equipment is simultaneously connected to two or more cells (or cell sectors) during a call), which is used by dedicated channels. Instead, the HS-DSCH uses a procedure called "serving HS-DSCH cell change" to make a hard handover (e.g., where the user equipment terminates an initial connection with a cell before switching to another cell).

A signaling sequence for a serving HS-DSCH cell change is triggered when the user equipment sends a measurement report to a serving radio network controller (SRNC). The measurement report may include signal quality information (e.g., a strength of a signal between the user equipment and a serving cell), and may indicate that another cell (e.g., a target cell) in an active set of cells (e.g., available to the user equipment) has become the strongest cell (e.g., based on signal strength). The SRNC receives the measurement report, and determines whether to change the serving cell for the user equipment based on the measurement report. When the SRNC decides to change the serving cell, the SRNC reconfigures the source and target cells (e.g., associated with a base station (or Node B)) with a new configuration (e.g., a switch from the source cell to the target cell) and configures an Iub transport bearer. When the source and target cells acknowledge the new configuration, the SRNC calculates an activation time for the new configuration (e.g., if the switch to the new configuration is a synchronized procedure) and reconfigures the user equipment with the new configuration (e.g., with a physical channel reconfiguration message (or cell change command) provided via the source cell). The activation time includes a time that the user equipment, the source cell, the target cell, and the SRNC are to switch to the new configuration, and is relative to a connection frame number (CFN). An offset time is needed to compensate for a time it takes the SRNC to transmit reconfiguration messages to the user equipment, the source cell, and the target cell. The cell change is performed at the activation time, and the user equipment transmits, to the SRNC, a complete message that acknowledges completion of the new configuration.

When the user equipment travels at a very high speed (e.g., a mobile telephone in a vehicle) during a call, a link quality between the user equipment and the source cell may rapidly change based on the movement of the user equipment. For example, the link quality between the user equipment and the source cell may degrade before the cell change procedure (e.g. from the source cell to the target cell) is complete. If this occurs before the SRNC is able to successfully transmit the physical channel reconfiguration message (e.g., via the source cell) to the user equipment, the SRNC will be unable to communication with the user equipment and the call will be dropped.

One proposed solution to this problem includes transmitting the physical channel reconfiguration message to the user equipment via the target cell. This is made possible by the SRNC pre-loading the user equipment, the source cell, the target cell, and any other cells in the active set of cells associated with the user equipment with a high-speed related configuration. When the user equipment transmits the measurement report, the user equipment begins monitoring, in parallel, signaling channels (e.g., HS-DSCH shared control channels (HS-SCCHs)) associated with the source cell and the target cell. If the user equipment detects, via the monitoring, that it is scheduled in the target cell, the user equipment interprets the detected scheduling as an implicit cell change command and changes its configuration to a configuration associated with the target cell. The configuration change also includes changing the uplink associated with the user equipment, so that the user equipment begins measuring quality information (e.g., continuous quality information (CQI)) associated with the target cell, and adjusts the physical control channel (e.g., the HS-DSCH dedicated physical control channel (HS-DPCCH)) to the target cell.

See also "Universal Mobile Telecommunications System (UMTS); High Speed Downlink Packet Access (HSDPA); Overall description; stage 2", 3GPP TS25.308 Version 7.5.0, XP01400630. Also, the International patent application No. WO 2006/134480 describes transmission of a cell change command in a target cell.

However, with the proposed solution, the user equipment must monitor the signaling channel (e.g., the HS-SCCH) associated with the source cell and the signaling channel (e.g., the HS-SCCH) associated with the target cell. When a cell is added to the user equipment's HSDPA active set of cells, both the user equipment and the added cell need to be pre-configured with high-speed related configuration information. This includes reserving a temporary identifier (e.g., a HS-DSCH radio network temporary identifier (H-RNTI)) for the user equipment in all cells of the active set. The H-RNTI is unique within a cell and is assigned by the SRNC. Enhanced cell forward access channel (CELL_FACH) enables user equipment to send data packets on a high-speed downlink shared channel (HS-DSCH) instead of on the forward access channel (FACH). This improves the efficiency of downlink transmissions and also speeds up a state transmission into a dedicated state once more packets are transferred again. With enhanced CELL_FACH, users in a CELL_FACH state and a cell physical channel (CELL_PCH) state are allocated a H-RNTI. In total, approximately two-thousand H-RNTIs may be allocated per cell and may be completely or substantially allocated due to enhanced CELL_FACH. If all or substantially all of the H-RNTIs are allocated in a cell, the proposed solution may be unable to utilize H-RNTIs.
Furthermore, the proposed solution only works for a cell change to cells contained in the active set. However, a direct cell change to cells outside the active set of cells may be required to reduce dropped call rates. The proposed solution may not be viable in fast fading environments (e.g., when signal quality is rapidly fading for both the source and target cells) because the target cell may eventually not be the best cell to transmit the physical channel reconfiguration message to the user equipment.

### SUMMARY

It is an object of the invention to overcome at least some of the above disadvantages and to utilize an enhanced CELL_FACH transmission and a common H-RNTI to transmit a serving cell change message (e.g., a physical channel reconfiguration message), via a target cell, to user equipment. This object is obtained by the methods and devices as set out in the appended claims.

Embodiments described herein may provide systems and/or methods that transmit a physical channel reconfiguration message, via a target cell, to user equipment using a common H-RNTI. Instead of reserving a H-RNTI for each user equipment that has a particular cell in its active set of cells, a common H-RNTI is utilized to transmit the physical channel reconfiguration message, via a target cell, to user equipment. A high-speed related configuration for reading high-speed information in the target cell may be broadcast to the user equipment. In one example, the common H-RNTI may be the same as or similar to the H-RNTI used for a common control channel (CCCH). In other examples, a specific H-RNTI may be used for physical channel reconfiguration messages. Using the common H-RNTI may require that the entire physical channel reconfiguration message be transmitted over the target cell, rather than being transmitted via only a scheduling HS-SCCH. The physical channel reconfiguration message may include a unique user equipment identifier (e.g., a UMTS terrestrial radio access network (UTRAN) radio network temporary identifier (U-RNTI)). If the user equipment is unable to send hybrid automatic repeat request (HARQ) feedback to the target cell, repetitions can be used to increase reliability, such as for enhanced CELL_FACH.
In one exemplary implementation of this embodiment, the systems and/or methods may receive a measurement report from user equipment, and may determine whether a serving cell for the user equipment should change from a source cell to a target cell based on the measurement report. When it is determined that the serving cell should change, the systems and/or methods may configure the source cell and the target cell for the serving cell change, and may calculate an activation time for the serving cell change. The systems and/or methods may transmit, via the target cell, a serving cell change to the user equipment using a common H-RNTI and enhanced CELL_FACH, and may receive, from the user equipment, acknowledgement of the serving cell change.

In another exemplary implementation of this embodiment, the systems and/or methods may transmit a measurement report to a radio network controller, and may monitor a shared control channel associated with a target cell and incoming traffic associated with a source cell. The systems and/or methods may detect, via the monitoring, a serving cell change message that includes a common H-RNTI and a U-RNTI, and may decode a HS-DSCH associated with the target cell. If the decoding of the HS-DSCH is unsuccessful, the systems and/or methods may wait for HARQ repetitions and may repeat the decoding. If the decoding is successful, the systems and/or methods may determine whether the serving cell change message is addressed to user equipment based on the U-RNTI, and may transmit, to the radio network controller, an acknowledgement of the serving cell change when the U-RNTI matches the U-RNTI of the user equipment.

Systems and/or methods described herein may eliminate the need to preload the user equipment and all of the cells in the active set with high-speed configuration information, may eliminate the need to reserve a H-RNTI for the user equipment in all of the cells in the active set, and may work for cells outside the active set. The systems and/or methods may also be used in conjunction with bi-casting, in which the physical channel reconfiguration message (or cell change command) may be transmitted via both the source and target cells in order to improve robustness.

### BRIEF DESCRIPTION OF THE DRAWINGS

Fig. 1 depicts a diagram of an exemplary network in which systems and/or methods described herein may be implemented;
Fig. 2 illustrates a diagram of exemplary components of a radio network controller depicted Fig. 1;
Fig. 3 depicts a diagram of exemplary components of user equipment depicted in Fig. 1;
Figs. 4A and 4B depict diagrams of exemplary interactions among components of an exemplary portion of the network illustrated in Fig. 1;
Fig. 5 illustrates a diagram of exemplary cell change signaling among components of an exemplary portion of the network depicted in Fig. 1;
Fig. 6 depicts a diagram of exemplary functional components of the radio network controller depicted Figs. 1 and 2;
Fig. 7 illustrates a diagram of exemplary functional components of the user equipment depicted Figs. 1 and 3;
Figs. 8 and 9 depict flow charts of an exemplary process for changing a serving cell via a target cell and using a common H-RNTI according to embodiments described herein; and
Fig. 10 illustrates a flow chart of an exemplary process for changing a serving cell for user equipment according to embodiments described herein.

### DETAILED DESCRIPTION

The following detailed description refers to the accompanying drawings. The same reference numbers in different drawings may identify the same or similar elements. Also, the following detailed description does not limit the invention.

Embodiments described herein may provide systems and/or methods that transmit a serving cell change message (e.g., a physical channel reconfiguration message), via a target cell (and a source cell), to user equipment using a common H-RNTI.

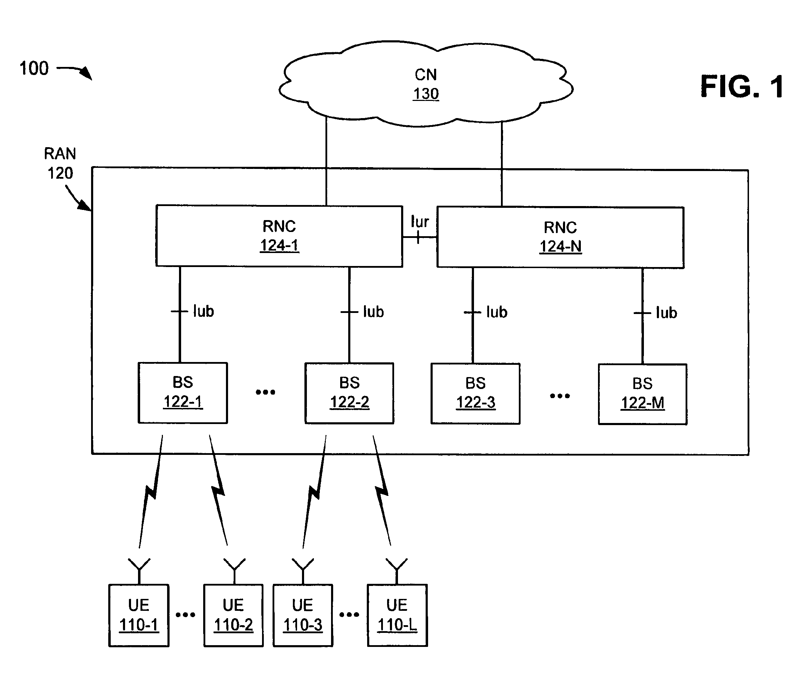

Fig. 1 depicts a diagram of an exemplary network 100 in which systems and/or methods described herein may be implemented. As shown, network 100 may include a group of user equipment (UE) 110-1 through 110-L (referred to collectively, and in some instances individually, as "user equipment 110"), a radio access network (RAN) 120, and a core network (CN) 130. Four pieces of user equipment 110, a single radio access network 120, and a single core network 130 have been illustrated in Fig. 1 for simplicity. In practice, there may be more UEs 110, random access networks 120, and/or core networks 130. Also, in some instances, a component in network 100 (e.g., one or more of user equipment 110, radio access network 120, and core network 130) may perform one or more functions described as being performed by another component or group of components in network 100.

User equipment 110 may include one or more devices capable of sending/receiving voice and/or data to/from radio access network 120. User equipment 110 may include, for example, a radiotelephone, a personal communications system (PCS) terminal (e.g., that may combine a cellular radiotelephone with data processing and data communications capabilities), a personal digital assistant (PDA) (e.g., that can include a radiotelephone, a pager, Internet/intranet access, etc.), a laptop computer, etc.

In one embodiment, user equipment 110 may transmit a measurement report to a radio network controller, and may monitor a shared control channel associated with a target cell and incoming traffic associated with a source cell. User equipment 110 may detect, via the monitoring, a serving cell change message that includes a common H-RNTI and a U-RNTI, and may decode information received on a HS-DSCH associated with the target cell. If the decoding of the information from HS-DSCH is unsuccessful, user equipment 110 may wait for HARQ repetitions and may repeat the decoding. If the decoding is successful, user equipment 110 may determine whether the serving cell change message is addressed to user equipment 110 based on the U-RNTI, and may transmit, to the radio network controller, an acknowledgement of the serving cell change when the U-RNTI matches the U-RNTI of user equipment 110.

Radio access network 120 may include one or more devices for transmitting voice and/or data to user equipment 110 and core network 130. As illustrated, radio access network 120 may include a group of base stations (BSs) 122-1 through 122-M (referred to collectively as "base stations 122" and in some instances, individually as "base station 122") and a group of radio network controllers (RNCs) 124-1 through 124-N (referred to collectively as "radio network controllers 124" and in some instances, individually as "radio network controller 124"). Four base stations 122 and two radio network controllers 124 are shown in Fig. 1 for simplicity. In practice, there may be more or fewer base stations 122 and/or radio network controllers 124. Also, in some instances, a component in radio access network 120 (e.g., one or more of base stations 122 and radio network controllers 124) may perform one or more functions described as being performed by another component or group of components in radio access network 120.

Base stations 122 (also referred to as "Node Bs") may include one or more devices that receive voice and/or data from radio network controllers 124 and transmit that voice and/or data to user equipment 110 via an air interface. Base stations 122 may also include one or more devices that receive voice and/or data from user equipment 110 over an air interface and transmit that voice and/or data to radio network controllers 124 or other user equipment 110.

Radio network controllers 124 may include one or more devices that control and manage base stations 122. Radio network controllers 124 may also include devices that perform data processing to manage utilization of radio network services. Radio network controllers 124 may transmit/receive voice and data to/from base stations 122, other radio network controllers 124, and/or core network 130.

A radio network controller 124 may act as a controlling radio network controller (CRNC), a drift radio network controller (DRNC), or a serving radio network controller (SRNC). A CRNC may be responsible for controlling the resources of a base station 122. On the other hand, an SRNC may serve particular user equipment 110 and may manage connections towards that user equipment 110. Likewise, a DRNC may fulfill a similar role to the SRNC (e.g., may route traffic between a SRNC and particular user equipment 110).

As illustrated in Fig. 1, a radio network controller 124 may connect to a base station 122 via an Iub interface and to another radio network controller 124 via an Iur interface.

In one embodiment, radio network controller 124 may receive a measurement report from user equipment 110, and may determine whether a serving cell for user equipment 110 should change from a source cell to a target cell based on the measurement report. When it is determined that the serving cell should change, radio network controller 124 may configure the source cell and the target cell for the serving cell change, and may calculate an activation time for the serving cell change. Radio network controller 124 may transmit, via the target cell, a serving cell change to user equipment 110 using a common H-RNTI and enhanced CELL_FACH, and may receive, from user equipment 110, acknowledgement of the serving cell change.

Core network 130 may include one or more devices that transfer/receive voice and/or data to a circuit-switched and/or packet-switched network. In one embodiment, core network 130 may include, for example, a Mobile Switching Center (MSC), a Gateway MSC (GMSC), a Media Gateway (MGW), a Serving General Packet Radio Service (GPRS) Support Node (SGSN), a Gateway GPRS Support Node (GGSN), and/or other devices.

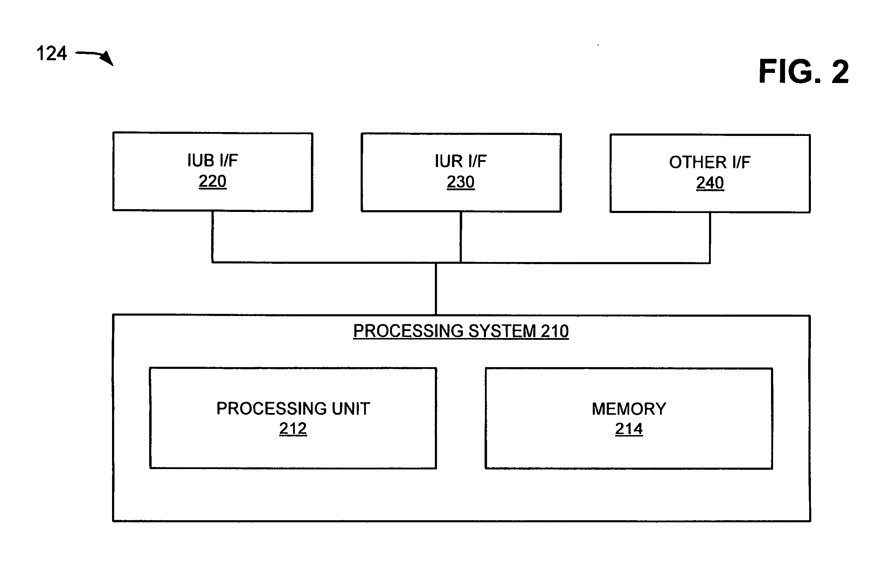

Fig. 2 illustrates a diagram of exemplary components of radio network controller 124. As shown in Fig. 2, radio network controller 124 may include a processing system 210, an Iub interface 220, an Iur interface 230, and/or other interfaces 240.

Processing system 210 may control the operation of radio network controller 124. As illustrated, processing system 210 may include a processing unit 212 and a memory 214. Processing unit 212 may handle protocol exchanges between Iub interface 220, Iur interface 230, and other interfaces 240. In addition, processing unit 212 may generate control messages and/or data messages and transmit those control messages and/or data messages via interfaces 220-240. Processing unit 212 may also process control messages and/or data messages received from interfaces 220-240. In one embodiment, processing unit 212 may include one or more processors, microprocessors, application specific integrated circuits (ASICs), field programmable gate arrays (FPGAs), or the like. Memory 214 may include a random access memory (RAM), a read-only memory (ROM), and/or another type of memory to store data and instructions that may be used by processing unit 212.

Iub interface 220 may include one or more line cards that allow radio network controller 124 to transmit control messages and/or data messages to and receive control messages and/or data messages from base station 122. lur interface 230 may include one or more line cards that allow radio network controller 124 to transmit control messages and/or data messages to and receive control messages and/or data messages from another radio network controller. Other interfaces 240 may include interfaces to other devices and/or networks. For example, other interfaces 240 may include an lucs interface, which is a core network interface to a circuit-switched voice network, and an Iups interface, which is a core network interface to a packet-switched data network.

As described herein, radio network controller 124 may perform certain operations in response to processing unit 212 executing software instructions of an application contained in a computer-readable medium, such as memory 214. A computer-readable medium may be defined as a physical or logical memory device. A logical memory device may include memory space within a single physical memory device or spread across multiple physical memory devices. The software instructions may be read into memory 214 from another computer-readable medium or from another device. The software instructions contained in memory may cause processing unit 212 to perform processes described herein. Alternatively, hardwired circuitry may be used in place of or in combination with software instructions to implement processes described herein. Thus, embodiments described herein are not limited to any specific combination of hardware circuitry and software.

Although Fig. 2 shows exemplary components of radio network controller 124, in other embodiments, radio network controller 124 may contain fewer, different, differently arranged, or additional components than depicted in Fig. 2. In still other embodiments, one or more components of radio network controller 124 may perform one or more other tasks described as being performed by one or more other components of radio network controller 124.

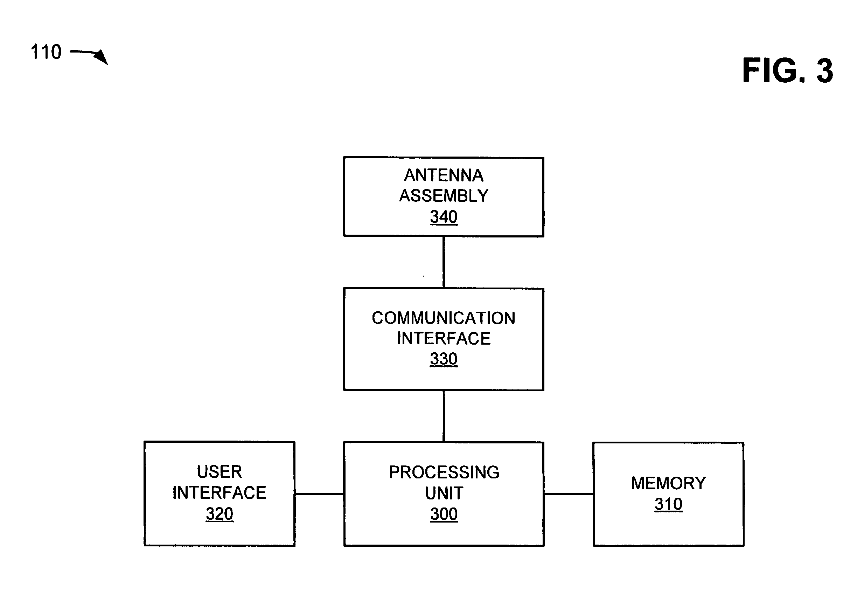

Fig. 3 depicts a diagram of exemplary components of user equipment 110. As shown in Fig. 3, user equipment 110 may include a processing unit 300, a memory 310, a user interface 320, a communication interface 330, and/or an antenna assembly 340.

Processing unit 300 may include one or more processors, microprocessors, ASICs, FPGAs, or the like. Processing unit 300 may control operation of user equipment 110 and its components. In one embodiment, processing unit 300 may control operation of components of user equipment 110 in a manner described herein.

Memory 310 may include a RAM, a ROM, and/or another type of memory to store data and instructions that may be used by processing unit 300.

User interface 320 may include mechanisms for inputting information to user equipment 110 and/or for outputting information from user equipment 110.

Communication interface 330 may include, for example, a transmitter that may convert baseband signals from processing unit 300 to radio frequency (RF) signals and/or a receiver that may convert RF signals to baseband signals. Alternatively, communication interface 330 may include a transceiver to perform functions of both a transmitter and a receiver. Communication interface 330 may connect to antenna assembly 340 for transmission and/or reception of the RF signals.

Antenna assembly 340 may include one or more antennas to transmit and/or receive signals through a radio interface. Antenna assembly 340 may, for example, receive RF signals from communication interface 330 and transmit them through the radio interface, and receive RF signals through the radio interface and provide them to communication interface 330. In one embodiment, for example, communication interface 330 may communicate with a network (e.g., network 100) and/or devices connected to a network.

As described herein, user equipment 110 may perform certain operations in response to processing unit 300 executing software instructions of an application contained in a computer-readable medium, such as memory 310. The software instructions may be read into memory 310 from another computer-readable medium or from another device via communication interface 330. The software instructions contained in memory 310 may cause processing unit 300 to perform processes described herein. Alternatively, hardwired circuitry may be used in place of or in combination with software instructions to implement processes described herein. Thus, embodiments described herein are not limited to any specific combination of hardware circuitry and software.

Although Fig. 3 shows exemplary components of user equipment 110, in other embodiments, user equipment 110 may contain fewer, different, or additional components than depicted in Fig. 3. In still other embodiments, one or more components of user equipment 110 may perform one or more other tasks described as being performed by one or more other components of user equipment 110.

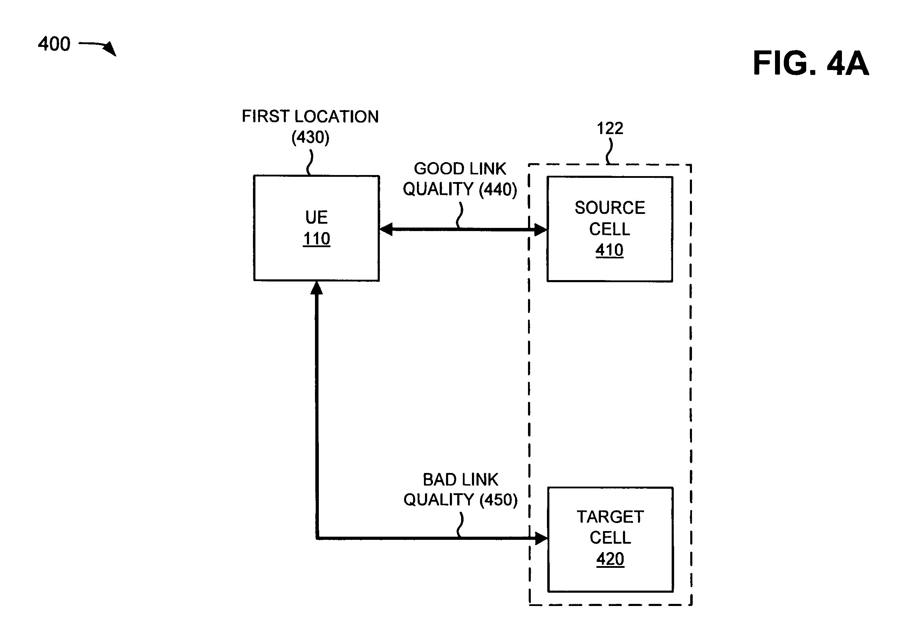

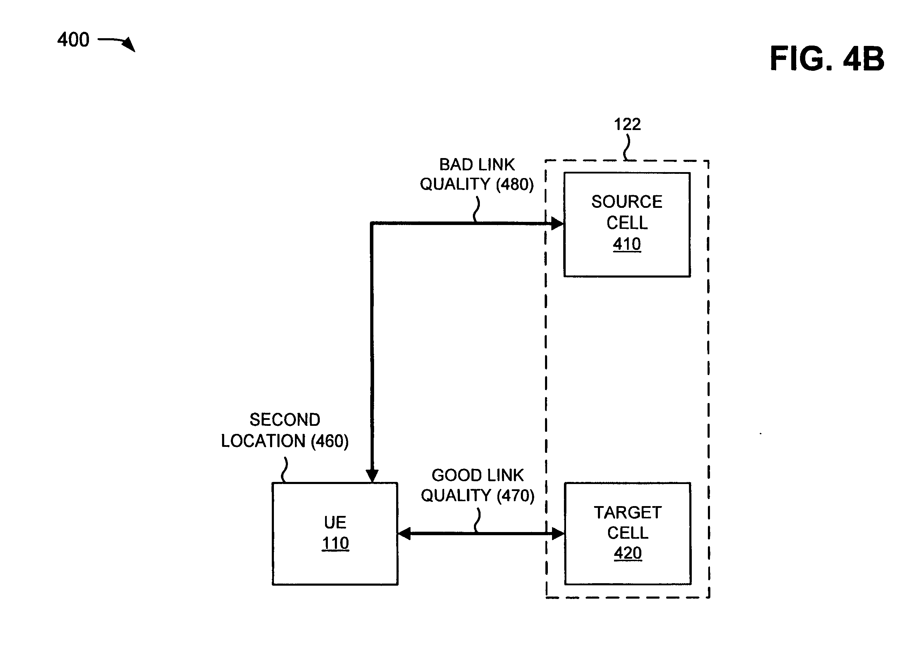

Figs. 4A and 4B depict diagrams of exemplary interactions among components of an exemplary portion 400 of network 100. As illustrated, exemplary network portion 400 may include user equipment 110 and base station 122. User equipment 110 may include the features described above in connection with, for example, Figs. 1 and 3. Base station 122 may include the features described above in connection with, for example, Fig. 1.

As shown in Fig. 4A, base station 122 may include a source cell 410 and a target cell 420. Source cell 410 may include a radio cell (or cell) that is served by base station 122 and provides radio coverage over an area. Target cell 420 may include a radio cell (or cell) that is served by base station 122 and provides radio coverage over another area. The coverage areas associated with source cell 410 and target cell 420 may overlap or may be distinct. Base station 122 may serve additional cells other than source cell 410 and target cell 420. In one embodiment, source cell 410 may be served by a first base station (e.g., base station 122-1) and target cell 420 may be served by a second base station (e.g., base station 122-2), different than the first base station.

As further shown in Fig. 4A, user equipment 110 may be located at a first location 430 that is closer to source cell 410 than target cell 420. In such an arrangement, a communication link (or link) between user equipment 110 and source cell 410 may have a good link quality 440 (e.g., user equipment 110 may receive a strong signal from source cell 410). Thus, source cell 410 may be in an active set of cells associated with user equipment 110 and may be a serving cell for user equipment 110 when user equipment 110 is located at first location 430. Since target cell 420 may be further away from user equipment 110 than source cell 410, a communication link (or link) between user equipment 110 and target cell 420 may have a bad link quality 450 (e.g., user equipment 110 may receive a weak signal from target cell 420). Thus, target cell 420 may be in an active set of cells associated with user equipment 110 but may not be a serving cell for user equipment 110 when user equipment 110 is located at first location 430.

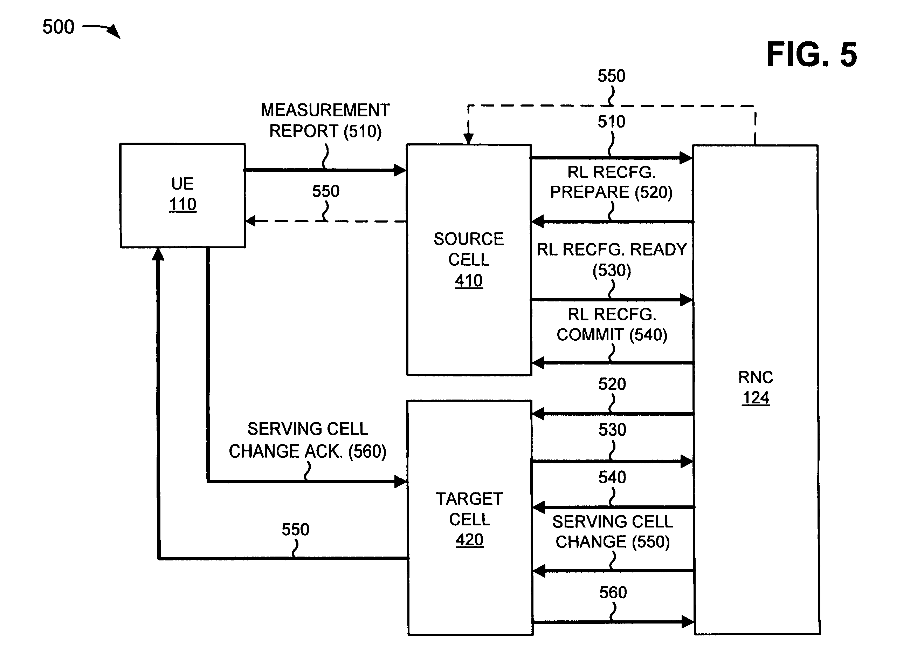

As shown in Fig. 4B, user equipment 110 may physically move to a second location 460. For example, if user equipment 110 is a mobile phone provided in a vehicle, the vehicle may travel from first location 430 to second location 460. Second location 460 may be closer to target cell 420 than source cell 410. The link between user equipment 110 and target cell 420 may have a good link quality 470 (e.g., user equipment 110 may receive a strong signal from target cell 420) when user equipment 110 is located at second location 460. The link between user equipment 110 and source cell 410 may have a bad link quality 480 (e.g., user equipment 110 may receive a weak signal from source cell 410) when user equipment 110 is located at second location 460. Thus, user equipment 110 may wish to change its serving cell from source cell 410 to target cell 420 when user equipment 110 is located at second location 460. Details about how user equipment 110 changes its serving cell from source cell 410 to target cell 420 are described below in connection with, for example, Fig. 5-10.

Although Figs. 4A and 4B show exemplary components of network portion 400, in other implementations, network portion 400 may contain fewer, different, differently arranged, or additional components than depicted in Figs. 4A and 4B. In still other implementations, one or more components of network portion 400 may perform one or more other tasks described as being performed by one or more other components of network portion 400.

Fig. 5 illustrates a diagram of exemplary cell change signaling among components of an exemplary portion 500 of network 100. As illustrated, exemplary network portion 500 may include user equipment 110, radio network controller 124, source cell 410, and target cell 420. User equipment 110 may include the features described above in connection with, for example, Figs. 1 and 3. Radio network controller 124 may include the features described above in connection with, for example, Figs. 1 and 2. Source cell 410 and target cell 420 may include the features described above in connection with, for example, Figs. 4A and 4B.

As further shown in Fig. 5, user equipment 110 may provide a measurement report 510 to source cell 410 (e.g., which may be a serving cell for user equipment 110). Measurement report 510 may include signal quality information (e.g., a strength of a signal between user equipment and a serving cell (e.g., source cell 410)) and may indicate that another cell (e.g., target cell 420) in an active set of cells (e.g., available to user equipment 110) has become the strongest cell (e.g., based on signal strength). Source cell 410 may receive measurement report 510 and may provide measurement report 510 to radio network controller 124. In one example, measurement report 510 may be provided to radio network controller 124 via radio resource control (RRC) signaling.

When radio network controller 124 receives measurement report 510, radio network controller 124 may determine whether the serving cell for user equipment 110 should change from source cell 410 to target cell 420 based on measurement report 510. When radio network controller 124 determines that the serving cell for user equipment 110 should change, radio network controller 124 may configure source cell 410 and target cell 420 for the cell change (e.g., from source cell 410 to target cell 420). For example, radio network controller 124 may provide a radio link (RL) reconfiguration prepare message 520 to source cell 410 and target cell 420. Message 520 may include new configuration information, such as information associated with changing the serving cell for user equipment 110 from source cell 410 to target cell 420. Source cell 410 and target cell 420 may acknowledge the new configuration by providing a RL reconfiguration ready message 530 to radio network controller 124. Messages 530 may include an acknowledgement that the serving cell is ready to be changed for user equipment 110 from source cell 410 to target cell 420.

When radio network controller 124 receives messages 530, radio network controller 124 may calculate an activation time for the new configuration. The activation time may include a time that user equipment 110, source cell 410, target cell 420, and radio network controller 124 are to switch to the new configuration. An offset time may be used with the activation time in order to compensate for a time it takes radio network controller 124 to transmit reconfiguration messages to user equipment 110, source cell 410, and target cell 420. Radio network controller 124 may provide a RL reconfiguration commit message 540 to source cell 410 and target cell 420, and may provide a serving cell change message 550 to target cell 420. Message 540 may include an instruction that changes the serving cell for user equipment 110 from source cell 410 to target cell 420 (e.g., at the calculated activation time). In one example, messages 520-540 may be provided between radio network controller 124 and source cell 410 and target cell 420 via Node B application part (NBAP) signaling.

Serving cell change message 550 may include a physical channel reconfiguration message that instructs user equipment 110 to change its serving cell from source cell 410 to target cell 420 (e.g., at the calculated activation time). In one example, serving cell change message 550 may be provided to user equipment 110 via RRC signaling. As shown in Fig. 5, serving cell change message 550 may be transmitted to user equipment 110 via target cell 420 instead of (or in addition to) source cell 410 (e.g., as indicated by the dashed lines). Serving cell change message 550 may be transmitted to user equipment 110 (e.g. via target cell 420) using a common H-RNTI on the radio interface. This may avoid the drawback of having to reserve H-RNTIs in all cells of the active set associated with user equipment 110, and may enable user equipment 110 to change its serving cell to a cell that is not in the active set.

The common H-RNTI may be the same as or similar to the H-RNTI used for a common control channel (CCCH) in enhanced CELL_FACH, or may be a separate H-RNTI reserved for serving cell change messages (e.g., serving cell change message 550). A U-RNTI (e.g., identifying user equipment 110) may be included in serving cell change message 550. Serving cell change message 550 (e.g., including the common H-RNTI) may be provided to user equipment 110 via a broadcast channel (BCCH) or RRC signaling in target cell 420, or may be predefined in a standard (e.g., a Third Generation Partnership Project (3GPP) standard). If HARQ feedback is not available, target cell 420 may perform autonomous retransmissions of the serving cell change message 550 to increase reliability, in a same or similar way as is done for CCCH.

Serving cell change message 550 may be different from other types of data sent over enhanced CELL_FACH without HARQ or CQI reporting. This may be true because serving cell change message 550 may be required for handover performance, and care may be needed to set transmit power and modulation (e.g., for target cell 420) if CQI feedback is not available in target cell 420. To increase a probability of success for sending serving cell change message 550 over enhanced CELL_FACH, when selecting the transmit power and transmit frequency (e.g., for target cell 420), a worst received CQI from a "worst" user equipment associated with target cell 420 may be used as a reference for user equipment 110. Other reference measurements may include common pilot channel (CPICH) pilot energy to total received energy (Ec/Io) information and/or received signal code power (RSCP) values for target cell 420, as reported by user equipment 110 to radio network controller 124 (e.g., via measurement report 510). In one example, more resources (e.g., more power/codes, consecutively sending serving cell change message 550, etc.) may be used to send serving cell change message 550. If enhanced CELL_FACH is not available in user equipment 110 and/or base station 122 (e.g., target cell 420), the FACH may be used to transmit serving cell change message 550. In such a case, the CCCH may be used to carry serving cell change message 550 and user equipment 110 may be addressed by the U-RNTI.

As further shown in Fig. 5, target cell 420 may provide serving cell change message 550 to user equipment 110. User equipment 110 may receive serving cell change message 550, may change its serving cell from source cell 410 to target cell 420, based on message 550, and may transmit a serving cell change acknowledgement message 560 to target cell 420. Message 560 may include an acknowledgement that user equipment 110 changed its serving cell from source cell 410 to target cell 420. Target cell 420 may provide message 560 to radio network controller 124.

Although Fig. 5 shows exemplary components of network portion 500, in other implementations, network portion 500 may contain fewer, different, differently arranged, or additional components than depicted in Fig. 5. In still other implementations, one or more components of network portion 500 may perform one or more other tasks described as being performed by one or more other components of network portion 500.

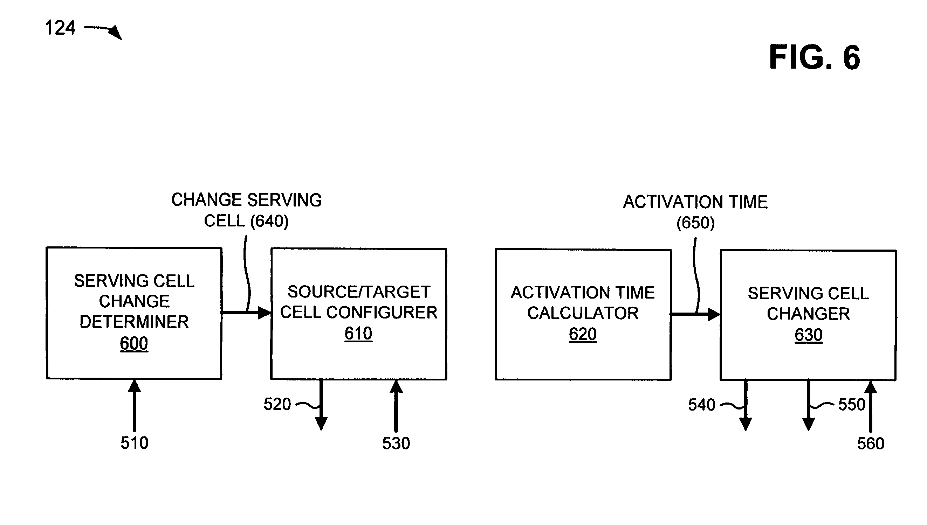

Fig. 6 depicts a diagram of exemplary functional components of radio network controller 124. In one embodiment, the functions described in connection with Fig. 6 may be performed by processing unit 212 (Fig. 2). As shown, radio network controller 124 may include a serving cell change determiner 600, a source/target cell configurer 610, an activation time calculator 620, and a serving cell changer 630.

Serving cell change determiner 600 may include any hardware or combination of hardware and software that may receive measurement report 510 from user equipment 110, and may determine to change the serving cell for user equipment 110 based on measurement report 510, as indicated by reference number 640. For example, serving cell change 640 may be determined when a target cell (e.g., target cell 420) becomes a strongest cell in an active set of cells associated with user equipment 110.

Source/target cell configurer 610 may include any hardware or combination of hardware and software that may receive serving cell change 640 from serving cell change determiner 600, and may configure source cell 410 and target cell 420 for serving cell change 640. For example, source/target cell configurer 610 may provide RL reconfiguration prepare message 520 to source cell 410 and target cell 420, and may receive RL reconfiguration ready message 530 from source cell 410 and target cell 420.

Activation time calculator 620 may include any hardware or combination of hardware and software that may calculate an activation time 650 for the new configuration. Activation time 650 may include a time that user equipment 110, source cell 410, target cell 420, and radio network controller 124 are to switch to the new configuration. An offset time may be used with activation time 650 to compensate for a time it takes radio network controller 124 to transmit reconfiguration messages to user equipment 110, source cell 410, and target cell 420. Activation time calculator 620 may provide activation time 650 to serving cell changer 630.

Serving cell changer 630 may include any hardware or combination of hardware and software that may receive activation time 650 from activation time calculator 620. Serving cell changer 630 may provide RL reconfiguration commit message 540 to source cell 410 and target cell 420, and may provide serving cell change message 550 to target cell 420. Serving cell changer 630 may receive serving cell change acknowledgement message 560, generated by user equipment 110, when the serving cell change operation is complete.

Although Fig. 6 shows exemplary functional components of radio network controller 124, in other implementations, radio network controller 124 may contain fewer, different, differently arranged, or additional functional components than depicted in Fig. 6. In still other implementations, one or more functional components of radio network controller 124 may perform one or more other tasks described as being performed by one or more other functional components of radio network controller 124.

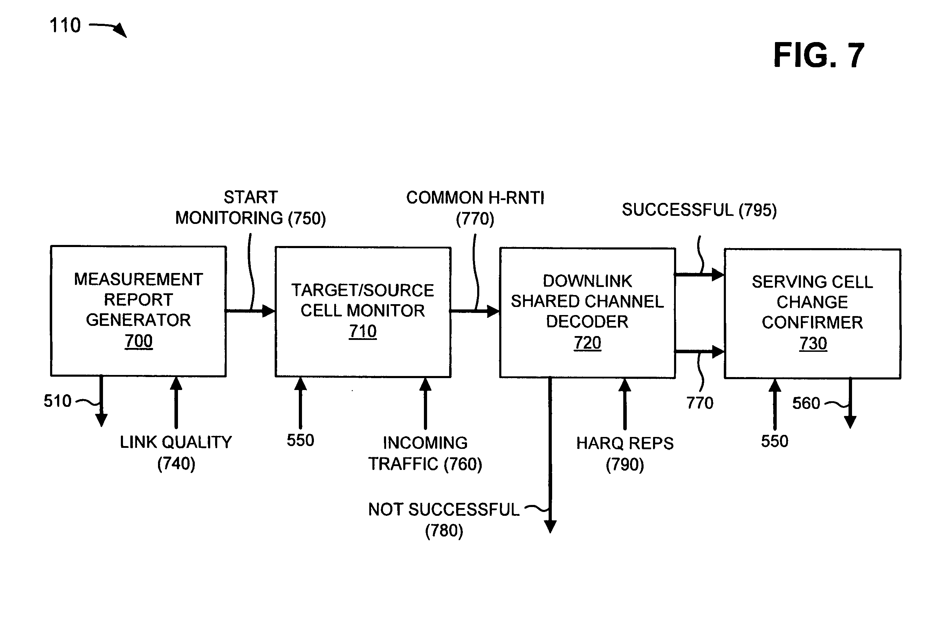

Fig. 7 illustrates a diagram of exemplary functional components of user equipment 110. In one embodiment, the functions described in connection with Fig. 7 may be performed by processing unit 300 (Fig. 3). As shown, user equipment 110 may include a measurement report generator 700, a target/source cell monitor 710, a downlink shared channel decoder 720, and a serving cell change confirmer 730.

Measurement report generator 700 may include any hardware or combination of hardware and software that may receive link quality information 740 from source cell 410 and target cell 420 or may determine link quality information 740 from signals received from source cell 410 and target cell 420. Measurement report generator 700 may generate measurement report 510 based on link quality information 740. Link quality information 740 may include quality information (e.g., signal strength of source cell 410 and/or target cell 420 received by user equipment 110) associated with communication links in an active set of cells associated with user equipment 110. When measurement report generator 700 transmits measurement report 510, measurement report generator 700 may instruct target/source cell monitor 710 to start monitoring 750.

Target/source cell monitor 710 may include any hardware or combination of hardware and software that may receive start monitoring instruction 750 from measurement report generator 700, and may begin monitoring the HS-SCCH of target cell 420 for the common H-RNTI used to transmit serving cell change message 550. In one embodiment, serving cell change message 550 and its associated information (e.g., a HS-SCCH code, the H-RNTI, etc.) may be received by user equipment 110 via a broadcast control channel (BCCH). At the same time, target/source cell monitor 710 may continue to monitor the current serving cell (e.g., source cell 410) for any incoming traffic 760 (e.g., information received from source cell 410). Once a common H-RNTI 770 is detected (e.g., via serving cell change message 550), target/source cell monitor 710 may provide common H-RNTI 770 to downlink shared channel decoder 720.

Downlink shared channel decoder 720 may include any hardware or combination of hardware and software that may receive common H-RNTI 770 from target/source cell monitor 710, and may decode information received on the HS-DSCH associated with target cell 420. If the decoding is not successful 780, downlink shared channel controller 720 may receive HARQ repetitions 790 until the decoding is successful 795. Once the decoding is successful 795, downlink shared channel controller 720 may provide common H-RNTI 770 and successful indication 795 to serving cell change confirmer 730.

Serving cell change confirmer 730 may include any hardware or combination of hardware and software that may receive common H-RNTI 770 and successful indication 795 from downlink shared channel decoder 720, and may read the U-RNTI of serving cell change message 550 to determine whether serving cell change message 550 was addressed to user equipment 110. If the U-RNTI of serving cell change message 550 matches the U-RNTI of user equipment 110, serving cell change determiner 730 may change the serving cell (e.g., of user equipment 110) from source cell 410 to target cell 420, based on message 550, and may transmit serving cell change acknowledgement message 560 to target cell 420.

In one alternative embodiment, user equipment 110 may perform the functions described above in connection with Fig. 7, but user equipment 110 (e.g., target/source cell monitor 710) may receive information from source cell 410 about a set of HS-SCCHs to monitor in target cell 420. In another alternative embodiment, user equipment 110 may perform the functions described above in connection with Fig. 7, and user equipment 110 may receive common H-RNTI 770 via RRC signaling from target cell 420 (e.g., via serving cell change message 550) or common H-RNTI 770 may be defined (e.g., for user equipment 110) via a reserved value in a standard (e.g., a 3GPP standard).

Although Fig. 7 shows exemplary functional components of user equipment 110, in other implementations, user equipment 110 may contain fewer, different, differently arranged, or additional functional components than depicted in Fig. 7. In still other implementations, one or more functional components of user equipment 110 may perform one or more other tasks described as being performed by one or more other functional components of user equipment 110.

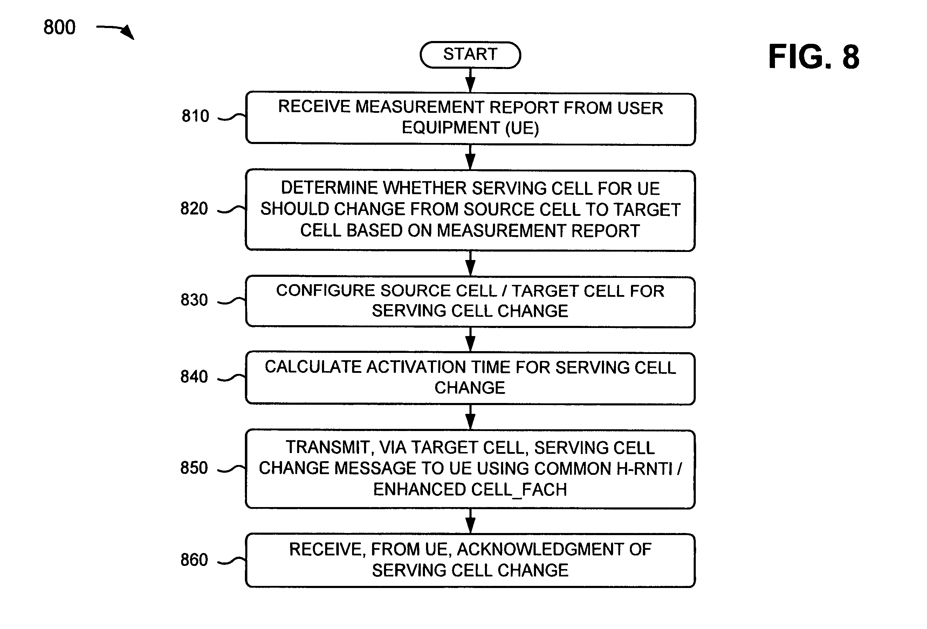

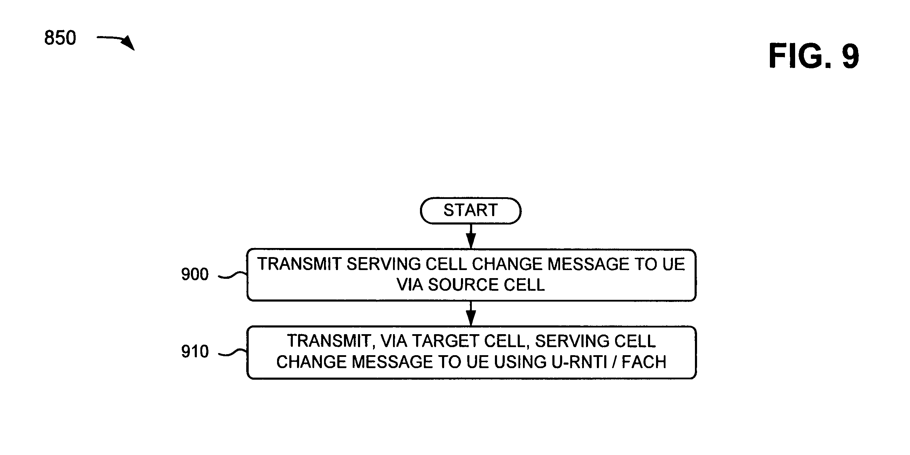

Figs. 8 and 9 depict flow charts of an exemplary process 800 for changing a serving cell via a target cell and using a common H-RNTI according to embodiments described herein. In one embodiment, process 800 may be performed by radio network controller 124. In other embodiments, some or all of process 800 may be performed by another device or group of devices (e.g., communicating with radio network controller 124).

As illustrated in Fig. 8, process 800 may begin with receipt of a measurement report from user equipment (block 810), and determining whether a serving cell for the user equipment should change from a source cell to a target cell based on the measurement report (block 820). For example, in embodiments described above in connection with Fig. 5, user equipment 110 may provide measurement report 510 to source cell 410 (e.g., which may be a serving cell for user equipment 110), and source cell 410 may provide measurement report 510 to radio network controller 124. When radio network controller 124 receives measurement report 510, radio network controller 124 may determine whether the serving cell for user equipment 110 should change from source cell 410 to target cell 420 based on measurement report 510.

As further shown in Fig. 8, the source cell and the target cell may be configured for the serving cell change (block 830), and an activation time may be calculated for the serving cell change (block 840). For example, in embodiments described above in connection with Fig. 5, when radio network controller 124 determines that the serving cell for user equipment 110 should change, radio network controller 124 may configure source cell 410 and target cell 420 for the cell change (e.g., from source cell 410 to target cell 420). Radio network controller 124 may calculate an activation time for the new configuration. The activation time may include a time that user equipment 110, source cell 410, target cell 420, and radio network controller 124 are to switch to the new configuration. An offset time may be used with the activation time in order to compensate for a time it takes radio network controller 124 to transmit reconfiguration messages to user equipment 110, source cell 410, and target cell 420.

Returning to Fig. 8, a serving cell change message may be transmitted, via the target cell, to the user equipment using a common H-RNTI and enhanced CELL_FACH (block 850), and an acknowledgement of the serving cell change may be received from the user equipment (block 860). For example, in embodiments described above in connection with Fig. 5, radio network controller 124 may provide RL reconfiguration commit message 540 to source cell 410 and target cell 420, and may provide serving cell change message 550 to target cell 420. Message 540 may include an instruction that changes the serving cell for user equipment 110 from source cell 410 to target cell 420 (e.g., at the calculated activation time). Serving cell change message 550 may include a physical channel reconfiguration message that instructs user equipment 110 to change its serving cell from source cell 410 to target cell 420 (e.g., at the calculated activation time). Serving cell change message 550 may be transmitted to user equipment 110, via target cell 420 instead of (or in addition to) source cell 410, and using a common H-RNTI on the radio interface. User equipment 110 may transmit serving cell change acknowledgement message 560 to target cell 420. Target cell 420 may provide message 560 to radio network controller 124.

Process block 850 may include the process blocks depicted in Fig. 9. As illustrated in Fig. 9, process block 850 may include transmitting the serving cell change message to the user equipment via the source cell (block 900), and transmitting, via the target cell, the serving cell change message to the user equipment using U-RNTI and FACH (block 910). For example, in embodiments described above in connection with Fig. 5, serving cell change message 550 may be transmitted to user equipment 110 via source cell 410 and target cell 420. If enhanced CELL_FACH is not available in user equipment 110 and/or base station 122 (e.g., target cell 420), the FACH may be used to transmit serving cell change message 550. In such a case, the CCCH may be used to carry serving cell change message 550 and user equipment 110 may be addressed by the U-RNTI.

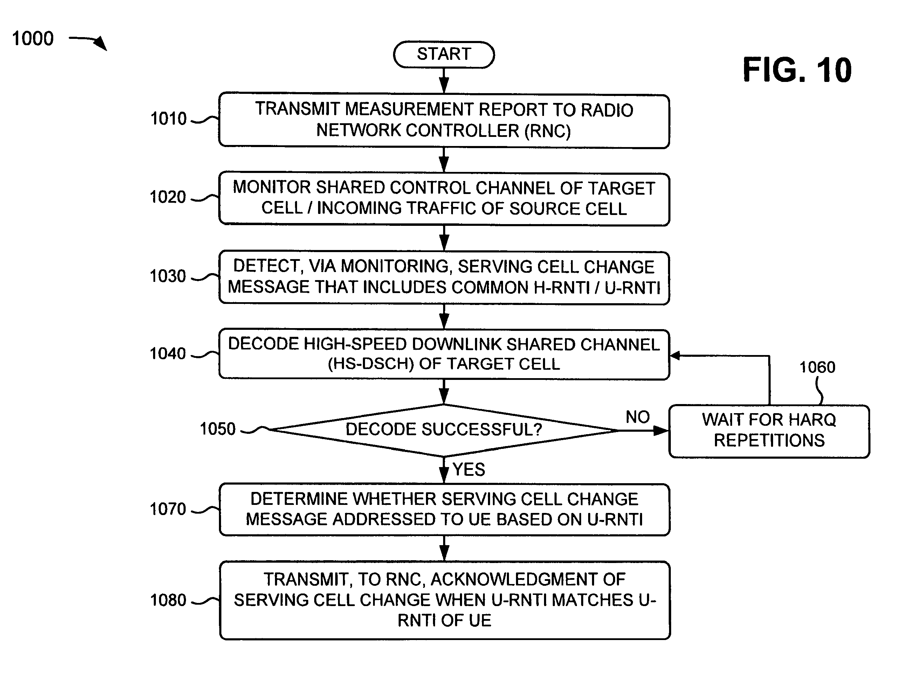

Fig. 10 illustrates a flow chart of an exemplary process 1000 for changing a serving cell for user equipment according to embodiments described herein. In one embodiment, process 1000 may be performed by user equipment 110. In other embodiments, some or all of process 1000 may be performed by another device (e.g., radio network controller 124) or group of devices (e.g., communicating with user equipment 110).

As illustrated in Fig. 10, process 1000 may include transmitting a measurement report to a radio network controller (block 1010), monitoring a shared control channel of a target cell and incoming traffic received from a source cell (block 1020), and detecting, via the monitoring, a serving cell change message that includes a common H-RNTI and a U-RNTI (block 1030). For example, in embodiments described above in connection with Fig. 7, measurement report generator 700 (e.g., of user equipment 110) may obtain link quality information 740 from signals transmitted by source cell 410 and target cell 420, and may generate measurement report 510 based on link quality information 740. When measurement report generator 700 transmits measurement report 510, measurement report generator 700 may instruct target/source cell monitor 710 (e.g., of user equipment 110) to start monitoring 750. Target/source cell monitor 710 may receive start monitoring instruction 750, and may begin monitoring the HS-SCCH of target cell 420 for the common H-RNTI used to transmit serving cell change message 550 (e.g., which includes the U-RNTI). Target/source cell monitor 710 may continue to monitor the current serving cell (e.g., source cell 410) for any incoming traffic 760.

As further shown in Fig. 10, a high-speed downlink shared channel (HS-DSCH) of the target cell may be decoded (block 1040). If the decoding is unsuccessful (block 1050 - NO), waiting for HARQ repetitions may occur (block 1060). For example, in embodiments described above in connection with Fig. 7, downlink shared channel decoder 720 (e.g., of user equipment 110) may receive common H-RNTI 770, and may decode the HS-DSCH of target cell 420. If the HS-DSCH decoding is not successful 780, downlink shared channel controller 720 may receive HARQ repetitions 790 until the decoding is successful 795.

Returning to Fig. 10, if the decoding is successful (block 1050 - YES), it may be determined whether the serving cell change message is addressed to the user equipment based on the U-RNTI (block 1070), and, when the U-RNTI matches a U-RNTI of the user equipment, an acknowledgement of the serving cell change may be transmitted to the radio network controller (block 1080). For example, in embodiments described above in connection with Fig. 7, once the HS-DSCH decoding is successful 795, downlink shared channel controller 720 may provide common H-RNTI 770 and successful indication 795 to serving cell change confirmer 730 (e.g., of user equipment 110). Serving cell change confirmer 730 may read the U-RNTI of serving cell change message 550 to determine whether serving cell change message 550 was addressed to user equipment 110. If the U-RNTI of serving cell change message 550 matches the U-RNTI of user equipment 110, serving cell change determiner 730 may change the serving cell (e.g., of user equipment 110) from source cell 410 to target cell 420, based on message 550, and may transmit serving cell change acknowledgement message 560 to target cell 420.

Embodiments described herein may provide systems and/or methods that transmit a serving cell change message (e.g., a physical channel reconfiguration message), via a target cell (and possibly a source cell), to user equipment using a common H-RNTI. The systems and/or methods may eliminate the need to preload the user equipment and all of the cells in the active set with high-speed configuration information, may eliminate the need to reserve a H-RNTI for the user equipment in all of the cells in the active set, and may work for cells outside the active set. The systems and/or methods may also be used in conjunction with bi-casting, in which the physical channel reconfiguration message (or cell change command) may be transmitted via both the source and target cells in order to improve robustness.

The foregoing description of embodiments provides illustration and description, but is not intended to be exhaustive or to limit the invention to the precise form disclosed. Modifications and variations are possible in light of the above teachings or may be acquired from practice of the invention. For example, while series of blocks have been described with regard to Figs. 8-10, the order of the blocks may be modified in other embodiments. Further, non-dependent blocks may be performed in parallel.

It should be emphasized that the term "comprises / comprising" when used in this specification is taken to specify the presence of stated features, integers, steps or components but does not preclude the presence or addition of one or more other features, integers, steps, components or groups thereof.

It will be apparent that exemplary aspects, as described above, may be implemented in many different forms of software, firmware, and hardware in the embodiments illustrated in the figures. The actual software code or specialized control hardware used to implement these aspects should not be construed as limiting. Thus, the operation and behavior of the aspects were described without reference to the specific software code--it being understood that software and control hardware could be designed to implement the aspects based on the description herein.

No element, block, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method for serving high-speed downlink shared channel, HS-DSCH, cell change, in a wireless environment that includes a radio network controller (124), a user equipment (110), a source cell (410), and a target cell (420), the method comprising:
receiving (810), in the radio network controller (124), a measurement report (510) generated by the user equipment (110);
determining (820), in the radio network controller (124), whether a serving cell for the user equipment (110) should change from the source cell (410) to the target cell (420) based on the measurement report (510);
configuring (830), in the radio network controller (124), the source cell (410) and the target cell (420) for the serving cell change when it is determined that the serving cell for the user equipment (110) should change; **characterized by** the steps of:
transmitting (850), from the radio network controller (124) via a shared control channel of the target cell (420) instead of or in addition to another channel of the source cell (410), a serving cell change message (550) to the user equipment (110) comprising a unique user equipment identifier using a common network temporary identifier; and
receiving (860), in the radio network controller (124) and from the user equipment (110), an acknowledgment of the serving cell change.

2. The method of claim 1, where the measurement report (510) comprises quality information associated with a communication link established between the source cell (410) and the user equipment (110).

3. The method of claim 1, where the common network temporary identifier comprises a high-speed downlink shared channel, HS-DSCH, radio network temporary identifier, RNTI, H-RNTI.

4. The method of claim 1, where the serving cell change message (550) is transmitted using an enhanced cell forward access channel, FACH.

5. The method of claim 1, further comprising:
calculating (840), via the radio network controller (124), an activation time for the serving cell change, and
where the serving cell change message (550) includes the calculated activation time.

6. The method of claim 1, where the common network temporary identifier comprises a universal mobile telecommunications system, UMTS, terrestrial radio access network, TRAN, radio network temporary identifier, RNTI, U-RNTI, and the serving cell change message is transmitted using a forward access channel, FACH.

7. The method of claim 1, where one of:
- the source cell (410) and the target cell (420) are associated with a same base station, or
- the source cell (410) and the target cell (420) are associated with different base stations.

8. A method for serving high-speed downlink shared channel, HS-DSCH, cell change, in a wireless environment that includes a radio network controller (124), a user equipment (110), a source cell (410), and a target cell (420), the method comprising:
transmitting (1010), from the user equipment (110), a measurement report (510) to the radio network controller (124), where the measurement report (510) causes the radio network controller (124) to determine whether the user equipment (110) should change from the source cell (410) to the target cell (420) and to transmit a serving cell change message (550) when it is determined that the user equipment (110) should change from the source cell (410) to the target cell (420); **characterized by** the steps of
monitoring (1020), in the user equipment (110), a shared control channel associated with the target cell (420) and another channel associated with the source cell (410)
detecting (1030), in the user equipment (110) via the monitoring of the shared control channel, the serving cell change message (550) that includes a common network temporary identifier and a unique user equipment identifier;
determining (1070), in the user equipment (110), whether the serving cell change message (550) is addressed to the user equipment (110) based on the unique user equipment identifier; and
transmitting (1080), from the user equipment (110) and to the radio network controller (124), an acknowledgment of the serving cell change when the unique user equipment identifier matches an identifier associated with the user equipment (110).

9. The method of claim 8, where the measurement report (510) comprises quality information associated with a communication link established between the source cell (410) and the user equipment (110).

10. The method of claim 8, where:
the common network temporary identifier comprises a high-speed downlink shared channel, HS-DSCH, radio network temporary identifier, RNTI, H-RNTI, and
the unique user equipment identifier comprises a universal mobile telecommunications system, UMTS, terrestrial radio access network, TRAN, radio network temporary identifier, RNTI, U-RNTI.

11. The method of claim 8, further comprising:
Decoding (1040), via the user equipment (110), information received from a high-speed downlink shared channel, HS-DSCH, established between the user equipment (110) and the target cell (420),
where the determination of whether the serving cell change message is addressed to the user equipment (110) is performed when the information received from the HS-DSCH is successfully decoded.

12. A radio network controller (124) adapted to perform a serving high-speed downlink shared channel, HS-DSCH, cell change in a wireless environment that includes a user equipment (110), a source cell (410), and a target cell (420), the radio network controller (124) comprising:
a memory (214) to store a plurality of instructions; and
a processor (212) to execute instructions in the memory (214) to:
receive a measurement report (510) generated by the user equipment (110),
determine whether a serving cell for the user equipment (110) should change from the source cell (410) to the target cell (420) based on the measurement report (510),
configure the source cell (410) for the serving cell change when it is determined that the serving cell for the user equipment (110) should change,
calculate an activation time for the serving cell change, **characterized in that** the processor (212) is further adapted to execute instructions in the memory (214) to:
transmit, via a shared control channel of the target cell (420) instead of or in addition to another channel of the source cell (410), a serving cell change message (550) to the user equipment (110) comprising a unique user equipment identifier using a common network temporary identifier, where the serving cell change message (550) includes the calculated activation time, and
receive, from the user equipment (110), an acknowledgment of the serving cell change.

13. The radio network controller (124) of claim 12, where the common network temporary identifier comprises a high-speed downlink shared channel, HS-DSCH, radio network temporary identifier, RNTI, H-RNTI.

14. The radio network controller (124) of claim 12, where the measurement report (510) comprises quality information associated with a communication link established between the source cell (410) and the user equipment (110).

15. The radio network controller (124) of claim 12, where the serving cell change message is transmitted using an enhanced cell forward access channel, FACH.

16. The radio network controller (124) of claim 12, where the common network temporary identifier comprises a universal mobile telecommunications system, UMTS, terrestrial radio access network, TRAN, radio network temporary identifier, RNTI, U-RNTI, and the serving cell change message (550) is transmitted using a forward access channel, FACH.

17. The radio network controller (124) of claim 12, where one of:
- the source cell (410) and the target cell (420) are associated with a same base station, or
- the source cell (410) and the target cell (420) are associated with different base stations.

18. A user equipment (110) adapted to perform a serving high-speed downlink shared channel, HS-DSCH, cell change in a wireless environment that includes a radio network controller (124), a source cell (410), and a target cell (420), the user equipment (110) comprising:
a memory (310) to store a plurality of instructions; and
a processor (300) to execute instructions in the memory (310) to:
transmit a measurement report (510) to the radio network controller (124), where the measurement report (510) causes the radio network controller (124) to determine whether the user equipment (110) should change from the source cell (410) to the target cell (420), and to transmit a serving cell change message (550) when it is determined that the user equipment (110) should change from the source cell (410) to the target cell (420), **characterized in that** the processor (300) is further adapted to execute instructions in the memory (310) to:
monitor a shared control channel associated with the target cell (420) and another channel associated with the source cell (410),
detect, via the monitoring of the shared control channel, the serving cell change message that includes a common network temporary identifier and a unique user equipment identifier,
determine whether the serving cell change message is addressed to the user equipment (110) based on the unique user equipment identifier, and
transmit, to the radio network controller (124), an acknowledgment of the serving cell change when the unique user equipment identifier matches an identifier associated with the user equipment (110).

19. The user equipment (110) of claim 18, where the processor (300) further executes instructions in the memory (310) to:
receive, from the source cell (410), information about a set of shared control channels associated with the target cell (420),
monitor the set of shared control channels, and
detect, via the monitoring of the set of shared control channels, the serving cell change message (550).

20. The user equipment (110) of claim 18, where the processor (300) further executes instructions in the memory (310) to:
receive the common network temporary identifier via radio resource control, RRC, signaling generated by the target cell (420).

21. The user equipment (110) of claim 18, where the measurement report (510) comprises quality information associated with a communication link established between the source cell (410) and the user equipment (110).

22. The user equipment (110) of claim 18, where:
the common network temporary identifier comprises a high-speed downlink shared channel, HS-DSCH, radio network temporary identifier, RNTI, H-RNTI, and
the unique user equipment identifier comprises a universal mobile telecommunications system, UMTS, terrestrial radio access network, TRAN, radio network temporary identifier, RNTI, U-RNTI.

23. The user equipment (110) of claim 18, where the processor (300) further executes instructions in the memory (310) to:
decode information received from a high-speed downlink shared channel, HS-DSCH, established between the user equipment (110) and the target cell (420),
where the determination of whether the serving cell change message is addressed to the user equipment (110) is performed when the information received from the HS-DSCH is successfully decoded

## Patentansprüche

1. Verfahren zum Wechseln einer versorgenden Zelle eines Hochgeschwindigkeits-Abwärtsverbindungs-Gemeinschaftskanals, HS-DSCH, in einer drahtlosen Umgebung, die eine Funknetzsteuerung (124), eine Benutzerausrüstung (110), eine Ausgangszelle (410) und eine Zielzelle (420) enthält, das Verfahren umfassend:
Empfangen (810), in der Funknetzsteuerung (124), eines von der Benutzerausrüstung (110) erzeugten Messberichts (510);
Bestimmen (820), in der Funknetzsteuerung (124), ob eine versorgende Zelle für die Benutzerausrüstung (110) von der Ausgangszelle (410) zu der Zielzelle (420) wechseln sollte, basierend auf dem Messbericht (510);
Konfigurieren (830), in der Funknetzsteuerung (124), der Ausgangszelle (410) und der Zielzelle (420) für den Wechsel der versorgenden Zelle, wenn bestimmt wird, dass die versorgende Zelle für die Benutzerausrüstung (110) wechseln sollte; **gekennzeichnet durch** die folgenden Schritte:
Übertragen (850), von der Funknetzsteuerung (124) über einen Gemeinschaftssteuerkanal der Zielzelle (420) anstelle von oder zusätzlich zu einem anderen Kanal der Ausgangszelle (410), einer Meldung zum Wechseln der versorgenden Zelle (550) an die Benutzerausrüstung (110), die eine eindeutige Benutzerausrüstungs-Kennzeichnung, unter Verwendung einer normalen temporären Netzkennzeichnung, umfasst; und
Empfangen (860), in der Funknetzsteuerung (124) und von der Benutzerausrüstung (110), einer Bestätigung des Wechsels der versorgenden Zelle.

2. Verfahren nach Anspruch 1, wobei der Messbericht (510) Qualitätsinformationen umfasst, die mit einer zwischen der Ausgangszelle (410) und der Benutzerausrüstung (110) hergestellten Kommunikationsverbindung assoziiert sind.

3. Verfahren nach Anspruch 1, wobei die normale temporäre Netzkennzeichnung eine temporäre Funknetzkennzeichnung, RNTI, eines Hochgeschwindigkeits-Abwärtsverbindungs-Gemeinschaftskanals, HS-DSCH, H-RNTI, umfasst.

4. Verfahren nach Anspruch 1, wobei die Meldung zum Wechseln der versorgenden Zelle (550) unter Verwendung eines erweiterten Zellenweiterleitungs-Zugangskanals, FACH, übertragen wird.

5. Verfahren nach Anspruch 1, weiter umfassend:
Berechnen (840), über die Funknetzsteuerung (124), einer Aktivierungszeit für den Wechsel der versorgenden Zelle, und
wobei die Meldung zum Wechseln der versorgenden Zelle (550) die berechnete Aktivierungszeit enthält.

6. Verfahren nach Anspruch 1, wobei die normale temporäre Netzkennzeichnung eine temporäre Funknetzkennzeichnung, RNTI, eines terrestrischen Funkzugangsnetzes, TRAN, eines universellen Mobilfunk-Kommunikationssystems, UMTS, U-RNTI, umfasst und die Meldung zum Wechseln der versorgenden Zelle unter Verwendung eines Weiterleitungs-Zugangskanals, FACH, übertragen wird.

7. Verfahren nach Anspruch 1, wobei eines von Folgendem zutrifft:
- die Ausgangszelle (410) und die Zielzelle (420) sind mit einer gleichen Basisstation assoziiert, oder
- die Ausgangszelle (410) und die Zielzelle (420) sind mit verschiedenen Basisstationen assoziiert.

8. Verfahren zum Wechseln einer versorgenden Zelle eines Hochgeschwindigkeits-Abwärtsverbindungs-Gemeinschaftskanals, HS-DSCH, in einer drahtlosen Umgebung, die eine Funknetzsteuerung (124), eine Benutzerausrüstung (110), eine Ausgangszelle (410) und eine Zielzelle (420) enthält, das Verfahren umfassend:
Übertragen (1010), von der Benutzerausrüstung (110), eines Messberichts (510) an die Funknetzsteuerung (124), wobei der Messbericht (510) bewirkt, dass die Funknetzsteuerung (124) bestimmt, ob die Benutzerausrüstung (110) von der Ausgangszelle (410) zu der Zielzelle (420) wechseln sollte, und eine Meldung zum Wechseln der versorgenden Zelle (550) überträgt, wenn bestimmt wird, dass die Benutzerausrüstung (110) von der Ausgangszelle (410) zu der Zielzelle (420) wechseln sollte; **gekennzeichnet durch** die folgenden Schritte
Überwachen (1020), in der Benutzerausrüstung (110), eines Gemeinschaftssteuerkanals, der mit der Zielzelle (420) assoziiert ist, und eines anderen Kanals, der mit der Ausgangszelle (410) assoziiert ist;
Detektieren (1030), in der Benutzerausrüstung (110) über das Überwachen des Gemeinschaftssteuerkanals, der Meldung zum Wechseln der versorgenden Zelle (550), die eine temporäre normale Netzkennzeichnung und eine eindeutige Benutzerausrüstungs-Kennzeichnung enthält;
Bestimmen (1070), in der Benutzerausrüstung (110), ob die Meldung zum Wechseln der versorgenden Zelle (550) an die Benutzerausrüstung (110) adressiert ist, basierend auf der eindeutigen Benutzerausrüstungs-Kennzeichnung; und
Übertragen (1080), von der Benutzerausrüstung (110) und an die Funknetzsteuerung (124), einer Bestätigung des Wechsels der versorgenden Zelle, wenn die eindeutige Benutzerausrüstungs-Kennzeichnung mit einer mit der Benutzerausrüstung (110) assoziierten Kennzeichnung übereinstimmt.

9. Verfahren nach Anspruch 8, wobei der Messbericht (510) Qualitätsinformationen umfasst, die mit einer zwischen der Ausgangszelle (410) und der Benutzerausrüstung (110) hergestellten Kommunikationsverbindung assoziiert sind.

10. Verfahren nach Anspruch 8, wobei:
die normale temporäre Netzkennzeichnung eine temporäre Funknetzkennzeichnung, RNTI, eines Hochgeschwindigkeits-Abwärtsverbindungs-Gemeinschaftskanals, HS-DSCH, H-RNTI, umfasst, und
die Benutzerausrüstungs-Kennzeichnung eine temporäre Funknetzkennzeichnung, RNTI, eines terrestrischen Funkzugangsnetzes, TRAN, eines universellen Mobilfunk-Kommunikationssystems, UMTS, U-RNTI, umfasst.

11. Verfahren nach Anspruch 8, weiter umfassend:
Decodieren (1040), über die Benutzerausrüstung (110), von Informationen, die von einem Hochgeschwindigkeits-Abwärtsverbindungs-Gemeinschaftskanals, HS-DSCH, der zwischen der Benutzerausrüstung (110) und der Zielzelle (420) eingerichtet ist, empfangen wurden,
wobei das Bestimmen, ob die Meldung zum Wechseln der versorgenden Zelle an die Benutzerausrüstung (110) adressiert ist, durchgeführt wird, wenn die von dem HS-DSCH empfangenen Informationen erfolgreich decodiert wurden.

12. Funknetzsteuerung (124), die angepasst ist zum Durchführen eines Wechsels einer versorgenden Zelle eines Hochgeschwindigkeits-Abwärtsverbindungs-Gemeinschaftskanals, HS-DSCH, in einer drahtlosen Umgebung, die eine Benutzerausrüstung (110), eine Ausgangszelle (410) und eine Zielzelle (420) enthält, die Funknetzsteuerung (124) umfassend:
einen Speicher (214) zum Speichern einer Vielzahl von Anweisungen; und
einen Prozessor (212) zum Ausführen von Anweisungen in dem Speicher (214) zum:
Empfangen eines von der Benutzerausrüstung (110) erzeugten Messberichts (510), Bestimmen, ob eine versorgende Zelle für die Benutzerausrüstung (110) von der Ausgangszelle (410) zu der Zielzelle (420) wechseln sollte, basierend auf dem Messbericht (510),
Konfigurieren der Ausgangszelle (410) für den Wechsel der versorgenden Zelle, wenn bestimmt wird, dass die versorgende Zelle für die Benutzerausrüstung (110) wechseln sollte,
Berechnen einer Aktivierungszeit für den Wechsel der versorgenden Zelle, **dadurch gekennzeichnet, dass** der Prozessor (212) weiter angepasst ist, um Anweisungen in dem Speicher (214) auszuführen zum:
Übertragen, über einen Gemeinschaftssteuerkanal der Zielzelle (420) anstelle von oder zusätzlich zu einem anderen Kanal der Ausgangszelle (410), einer Meldung zum Wechseln der versorgenden Zelle (550) an die Benutzerausrüstung (110), die eine eindeutige Benutzerausrüstungs-Kennzeichnung, die eine normale temporäre Netzkennzeichnung verwendet, umfasst, wobei die Meldung zum Wechseln der versorgenden Zelle (550) die berechnete Aktivierungszeit enthält, und
Empfangen, von der Benutzerausrüstung (110), einer Bestätigung des Wechsels der versorgenden Zelle.

13. Funknetzsteuerung (124) nach Anspruch 12, wobei die normale temporäre Netzkennzeichnung eine temporäre Funknetzkennzeichnung, RNTI, eines Hochgeschwindigkeits-Abwärtsverbindungs-Gemeinschaftskanals, HS-DSCH, H-RNTI, umfasst.

14. Funknetzsteuerung (124) nach Anspruch 12, wobei der Messbericht (510) Qualitätsinformationen umfasst, die mit einer zwischen der Ausgangszelle (410) und der Benutzerausrüstung (110) hergestellten Kommunikationsverbindung assoziiert sind.

15. Funknetzsteuerung (124) nach Anspruch 12, wobei die Meldung zum Wechseln der versorgenden Zelle unter Verwendung eines erweiterten Zellenweiterleitungs-Zugangskanals, FACH, übertragen wird.

16. Funknetzsteuerung (124) nach Anspruch 12, wobei die normale temporäre Netzkennzeichnung eine temporäre Funknetzkennzeichnung, RNTI, eines terrestrischen Funkzugangsnetzes, TRAN, eines universellen Mobilfunk-Kommunikationssystems, UMTS, U-RNTI, umfasst und die Meldung zum Wechseln der versorgenden Zelle (550) unter Verwendung eines Weiterleitungs-Zugangskanals, FACH, übertragen wird.

17. Funknetzsteuerung (124) nach Anspruch 12, wobei eines von Folgendem zutrifft:
- die Ausgangszelle (410) und die Zielzelle (420) sind mit einer gleichen Basisstation assoziiert, oder
- die Ausgangszelle (410) und die Zielzelle (420) sind mit verschiedenen Basisstationen assoziiert.

18. Benutzerausrüstung (110), die angepasst ist zum Durchführen eines Wechsels einer versorgenden Zelle eines Hochgeschwindigkeits-Abwärtsverbindungs-Gemeinschaftskanals, HS-DSCH, in einer drahtlosen Umgebung, die eine Funknetzsteuerung (124), eine Ausgangszelle (410) und eine Zielzelle (420) enthält, die Benutzerausrüstung (110) umfassend:
einen Speicher (310) zum Speichern einer Vielzahl von Anweisungen; und
einen Prozessor (300) zum Ausführen von Anweisungen in dem Speicher (310) zum:
Übertragen eines Messberichts (510) an die Funknetzsteuerung (124), wobei der Messbericht (510) bewirkt, dass die Funknetzsteuerung (124) bestimmt, ob die Benutzerausrüstung (110) von der Ausgangszelle (410) zu der Zielzelle (420) wechseln sollte, und eine Meldung zum Wechseln der versorgenden Zelle (550) überträgt, wenn bestimmt wird, dass die Benutzerausrüstung (110) von der Ausgangszelle (410) zu der Zielzelle (420) wechseln sollte; **dadurch gekennzeichnet, dass** der Prozessor (300) weiter angepasst ist, um Anweisungen in dem Speicher (310) auszuführen zum:
Überwachen eines Gemeinschaftssteuerkanals, der mit der Zielzelle (420) assoziiert ist, und eines anderen Kanals, der mit der Ausgangszelle (410) assoziiert ist,
Detektieren, über das Überwachen der Gemeinschaftssteuerkanals, der Meldung zum Wechseln der versorgenden Zelle, die eine temporäre normale Netzkennzeichnung und eine eindeutige Benutzerausrüstungs-Kennzeichnung enthält,
Bestimmen, ob die Meldung zum Wechseln der versorgenden Zelle an die Benutzerausrüstung (110) adressiert ist, basierend auf der eindeutigen Benutzerausrüstungs-Kennzeichnung, und
Übertragen, an die Funknetzsteuerung (124), einer Bestätigung des Wechsels der versorgenden Zelle, wenn die eindeutige Benutzerausrüstungs-Kennzeichnung mit einer mit der Benutzerausrüstung (110) assoziierten Kennzeichnung übereinstimmt.

19. Benutzerausrüstung (110) nach Anspruch 18, wobei der Prozessor (300) weiter Anweisungen in dem Speicher (310) ausführt zum:
Empfangen, von der Ausgangszelle (410), von Informationen über einen Satz von Gemeinschaftssteuerkanälen, die mit der Zielzelle (420) assoziiert sind,
Überwachen des Satzes von Gemeinschaftssteuerkanälen, und
Detektieren, über das Überwachen des Satzes von Gemeinschaftssteuerkanälen, der Meldung zum Wechseln der versorgenden Zelle (550).

20. Benutzerausrüstung (110) nach Anspruch 18, wobei der Prozessor (300) weiter Anweisungen in dem Speicher (310) ausführt zum:
Empfangen der normalen temporären Netzkennzeichnung über Signalisierung einer Funkbetriebsmittelsteuerung, RRC, die durch die Zielzelle (420) erzeugt wird.

21. Benutzerausrüstung (110) nach Anspruch 18, wobei der Messbericht (510) Qualitätsinformationen umfasst, die mit einer zwischen der Ausgangszelle (410) und der Benutzerausrüstung (110) hergestellten Kommunikationsverbindung assoziiert sind.

22. Benutzerausrüstung (110) nach Anspruch 18, wobei:
die normale temporäre Netzkennzeichnung eine temporäre Funknetzkennzeichnung, RNTI, eines Hochgeschwindigkeits-Abwärtsverbindungs-Gemeinschaftskanals, HS-DSCH, H-RNTI, umfasst, und
die eindeutige Benutzerausrüstungs-Kennzeichnung eine temporäre Funknetzkennzeichnung, RNTI, eines terrestrischen Funkzugangsnetzes, TRAN, eines universellen Mobilfunk-Kommunikationssystems, UMTS, U-RNTI, umfasst.

23. Benutzerausrüstung (110) nach Anspruch 18, wobei der Prozessor (300) weiter Anweisungen in dem Speicher (310) ausführt zum:
Decodieren von Informationen, die von einem Hochgeschwindigkeits-Abwärtsverbindungs-Gemeinschaftskanals, HS-DSCH, der zwischen der Benutzerausrüstung (110) und der Zielzelle (420) eingerichtet ist, empfangen wurden,
wobei das Bestimmen, ob die Meldung zum Wechseln der versorgenden Zelle an die Benutzerausrüstung (110) adressiert ist, durchgeführt wird, wenn die von dem HS-DSCH empfangenen Informationen erfolgreich decodiert wurden.

## Revendications

1. Procédé de changement de cellule de desserte de canal partagé en liaison descendante haut débit, HS-DSCH, dans un environnement sans fil qui comporte un contrôleur de réseau radio (124), un équipement utilisateur (110), une cellule source (410), et une cellule cible (420), le procédé comprenant les étapes ci-dessous consistant à :
recevoir (810), dans le contrôleur de réseau radio (124), un rapport de mesure (510) généré par l'équipement utilisateur (110) ;
déterminer (820), dans le contrôleur de réseau radio (124), si une cellule de desserte pour l'équipement utilisateur (110) doit passer de la cellule source (410) à la cellule cible (420) sur la base du rapport de mesure (510) ;
configurer (830), dans le contrôleur de réseau radio (124), la cellule source (410) et la cellule cible (420) pour le changement de cellule de desserte lorsqu'il est déterminé que la cellule de desserte pour l'équipement utilisateur (110) devrait changer ; **caractérisé par** les étapes ci-dessous consistant à :
transmettre (850), à partir du contrôleur de réseau radio (124), via un canal de commande partagé de la cellule cible (420), en remplacement ou en complément d'un autre canal de la cellule source (410), un message de changement de cellule de desserte (550) à l'équipement utilisateur (110) comprenant un identifiant unique d'équipement utilisateur, en faisant appel à un identifiant temporaire de réseau commun ; et
recevoir (860), dans le contrôleur de réseau radio (124) et en provenance de l'équipement utilisateur (110), un accusé de réception du changement de cellule de desserte.

2. Procédé selon la revendication 1, dans lequel le rapport de mesure (510) comporte des informations de qualité associées à une liaison de communication établie entre la cellule source (410) et l'équipement utilisateur (110).

3. Procédé selon la revendication 1, dans lequel l'identifiant temporaire de réseau commun comporte un identifiant temporaire de réseau radio, RNTI, de canal partagé en liaison descendante haut débit, HS-DSCH, H-RNTI.

4. Procédé selon la revendication 1, dans lequel le message de changement de cellule de desserte (550) est transmis en utilisant un canal d'accès aller à cellules améliorées, FACH.

5. Procédé selon la revendication 1, comprenant en outre les étapes ci-dessous consistant à :
calculer (840), via le contrôleur de réseau radio (124), un temps d'activation pour le changement de cellule de desserte ; et
dans lequel le message de changement de cellule de desserte (550) comporte le temps d'activation calculé.

6. Procédé selon la revendication 1, dans lequel l'identifiant temporaire de réseau commun comporte un identifiant temporaire de réseau radio, RNTI, de réseau d'accès radio terrestre, TRAN, de système universel de télécommunication avec les mobiles, UMTS, U-RNTI, et le message de changement de cellule de desserte est transmis en utilisant un canal d'accès aller, FACH.

7. Procédé selon la revendication 1, dans lequel :
- la cellule source (410) et la cellule cible (420) sont associées à une même station de base, ou
- la cellule source (410) et la cellule cible (420) sont associées à des stations de base distinctes.

8. Procédé de changement de cellule de desserte de canal partagé en liaison descendante haut débit, HS-DSCH, dans un environnement sans fil qui comporte un contrôleur de réseau radio (124), un équipement utilisateur (110), une cellule source (410), et une cellule cible (420), le procédé comprenant l'étape ci-dessous consistant à :
transmettre (1010), à partir de l'équipement utilisateur (110), un rapport de mesure (510) au contrôleur de réseau radio (124), dans lequel le rapport de mesure (510) amène le contrôleur de réseau radio (124) à déterminer si l'équipement utilisateur (110) doit passer de la cellule source (410) à la cellule cible (420), et à transmettre un message de changement de cellule de desserte (550) lorsqu'il est déterminé que l'équipement utilisateur (110) doit passer de la cellule source (410) à la cellule cible (420) ; **caractérisé par** les étapes ci-dessous consistant à :
surveiller (1020), dans l'équipement utilisateur (110), un canal de commande partagé associé à la cellule cible (420) et un autre canal associé à la cellule source (410) ;
détecter (1030), dans l'équipement utilisateur (110), via la surveillance du canal de commande partagé, le message de changement de cellule de desserte (550) qui comporte un identifiant temporaire de réseau commun et un identifiant unique d'équipement utilisateur ;
déterminer (1070), dans l'équipement utilisateur (110), si le message de changement de cellule de desserte (550) est adressé à l'équipement utilisateur (110), sur la base de l'identifiant unique d'équipement utilisateur ; et
transmettre (1080), de l'équipement utilisateur (110) au contrôleur de réseau radio (124), un accusé de réception du changement de cellule de desserte lorsque l'identifiant unique d'équipement utilisateur correspond à un identifiant associé à l'équipement utilisateur (110).

9. Procédé selon la revendication 8, dans lequel le rapport de mesure (510) comporte des informations de qualité associées à une liaison de communication établie entre la cellule source (410) et l'équipement utilisateur (110).

10. Procédé selon la revendication 8, dans lequel :
l'identifiant temporaire de réseau commun comporte un identifiant temporaire de réseau radio, RNTI, de canal partagé en liaison descendante haut débit, HS-DSCH, H-RNTI ; et
l'identifiant unique d'équipement utilisateur comporte un identifiant temporaire de réseau radio, RNTI, de réseau d'accès radio terrestre, TRAN, de système universel de télécommunication avec les mobiles, UMTS, U-RNTI.

11. Procédé selon la revendication 8, comprenant en outre l'étape ci-dessous consistant à :
décoder (1040), via l'équipement utilisateur (110), des informations reçues à partir d'un canal partagé en liaison descendante haut débit, HS-DSCH, établi entre l'équipement utilisateur (110) et la cellule cible (420) ;
dans lequel l' étape consistant à déterminer si le message de changement de cellule de desserte est adressé à l'équipement utilisateur (110) est mise en oeuvre lorsque les informations reçues à partir du canal HS-DSCH sont correctement décodées.

12. Contrôleur de réseau radio (124) apte à mettre en oeuvre un changement de cellule de desserte de canal partagé en liaison descendante haut débit, HS-DSCH dans un environnement sans fil qui comporte un équipement utilisateur (110), une cellule source (410), et une cellule cible (420), le contrôleur de réseau radio (124) comprenant :
une mémoire (214) pour stocker une pluralité d'instructions ; et
un processeur (212) pour exécuter des instructions dans la mémoire (214) en vue de :
recevoir un rapport de mesure (510) généré par l'équipement utilisateur (110) ;
déterminer si une cellule de desserte pour l'équipement utilisateur (110) doit passer de la cellule source (410) à la cellule cible (420) sur la base du rapport de mesure (510) ;
configurer la cellule source (410) pour le changement de cellule de desserte lorsqu'il est déterminé que la cellule de desserte pour l'équipement utilisateur (110) devrait changer ;
calculer un temps d'activation pour le changement de cellule de desserte, **caractérisé en ce que** le processeur (212) est en outre apte à exécuter des instructions dans la mémoire (214) en vue de :
transmettre, via un canal de commande partagé de la cellule cible (420), en remplacement ou en complément d'un autre canal de la cellule source (410), un message de changement de cellule de desserte (550) à l'équipement utilisateur (110) comprenant un identifiant unique d'équipement utilisateur en faisant appel à un identifiant temporaire de réseau commun, dans lequel le message de changement de cellule de desserte (550) comporte le temps d'activation calculé ; et
recevoir, à partir de l'équipement utilisateur (110), un accusé de réception du changement de cellule de desserte.

13. Contrôleur de réseau radio (124) selon la revendication 12, dans lequel l'identifiant temporaire de réseau commun comporte un identifiant temporaire de réseau radio, RNTI, de canal partagé en liaison descendante haut débit, HS-DSCH, H-RNTI.

14. Contrôleur de réseau radio (124) selon la revendication 12, dans lequel le rapport de mesure (510) comporte des informations de qualité associées à une liaison de communication établie entre la cellule source (410) et l'équipement utilisateur (110).

15. Contrôleur de réseau radio (124) selon la revendication 12, dans lequel le message de changement de cellule de desserte est transmis en utilisant un canal d'accès aller à cellules améliorées, FACH.

16. Contrôleur de réseau radio (124) selon la revendication 12, dans lequel l'identifiant temporaire de réseau commun comporte un identifiant temporaire de réseau radio, RNTI, de réseau d'accès radio terrestre, TRAN, de système universel de télécommunication avec les mobiles, UMTS, U-RNTI, et le message de changement de cellule de desserte (550) est transmis en utilisant un canal d'accès aller, FACH.

17. Contrôleur de réseau radio (124) selon la revendication 12, dans lequel :
- la cellule source (410) et la cellule cible (420) sont associées à une même station de base, ou
- la cellule source (410) et la cellule cible (420) sont associées à des stations de base distinctes.

18. Équipement utilisateur (110) apte à mettre en oeuvre un changement de cellule de desserte de canal partagé en liaison descendante haut débit, HS-DSCH dans un environnement sans fil qui comporte un contrôleur de réseau radio (124), une cellule source (410), et une cellule cible (420), l'équipement utilisateur (110) comprenant :
une mémoire (310) pour stocker une pluralité d'instructions ; et
un processeur (300) pour exécuter des instructions dans la mémoire (310) en vue de :
transmettre un rapport de mesure (510) au contrôleur de réseau radio (124), dans lequel le rapport de mesure (510) amène le contrôleur de réseau radio (124) à déterminer si l'équipement utilisateur (110) doit passer de la cellule source (410) à la cellule cible (420), et à transmettre un message de changement de cellule de desserte (550) lorsqu'il est déterminé que l'équipement utilisateur (110) doit passer de la cellule source (410) à la cellule cible (420), **caractérisé en ce que** le processeur (300) est en outre apte à exécuter des instructions dans la mémoire (310) en vue de :
surveiller un canal de commande partagé associé à la cellule cible (420) et un autre canal associé à la cellule source (410),
détecter, via la surveillance du canal de commande partagé, le message de changement de cellule de desserte qui comporte un identifiant temporaire de réseau commun et un identifiant unique d'équipement utilisateur ;
déterminer si le message de changement de cellule de desserte est adressé à l'équipement utilisateur (110), sur la base de l'identifiant unique d'équipement utilisateur ; et
transmettre, au contrôleur de réseau radio (124), un accusé de réception du changement de cellule de desserte lorsque l'identifiant unique d'équipement utilisateur correspond à un identifiant associé à l'équipement utilisateur (110).

19. Équipement utilisateur (110) selon la revendication 18, dans lequel le processeur (300) exécute en outre des instructions dans la mémoire (310) en vue de :
recevoir, à partir de la cellule source (410), des informations sur un ensemble de canaux de commande partagés associés à la cellule cible (420) ;
surveiller l'ensemble de canaux de commande partagés ; et
détecter, via la surveillance de l'ensemble de canaux de commande partagés, le message de changement de cellule de desserte (550).

20. Équipement utilisateur (110) selon la revendication 18, dans lequel le processeur (300) exécute en outre des instructions dans la mémoire (310) en vue de :
recevoir l'identifiant temporaire de réseau commun via la signalisation de commande de ressources radio, RRC, générée par la cellule cible (420).

21. Équipement utilisateur (110) selon la revendication 18, dans lequel le rapport de mesure (510) comporte des informations de qualité associées à une liaison de communication établie entre la cellule source (410) et l'équipement utilisateur (110).

22. Équipement utilisateur (110) selon la revendication 18, dans lequel :
l'identifiant temporaire de réseau commun comporte un identifiant temporaire de réseau radio, RNTI, de canal partagé en liaison descendante haut débit, HS-DSCH, H-RNTI ; et
l'identifiant unique d'équipement utilisateur comporte un identifiant temporaire de réseau radio, RNTI, de réseau d'accès radio terrestre, TRAN, de système universel de télécommunication avec les mobiles, UMTS, U-RNTI.

23. Équipement utilisateur (110) selon la revendication 18, dans lequel le processeur (300) exécute en outre des instructions dans la mémoire (310) en vue de :
décoder les informations reçues à partir d'un canal partagé en liaison descendante haut débit, HS-DSCH, établi entre l'équipement utilisateur (110) et la cellule cible (420),
dans lequel l'étape consistant à déterminer si le message de changement de cellule de desserte est adressé à l'équipement utilisateur (110) est mise en oeuvre lorsque les informations reçues à partir du canal HS-DSCH sont correctement décodées.
